# EUROPEAN PATENT SPECIFICATION

(11) **EP 3 199 591 B1**
(45) Date of publication and mention of the grant of the patent: **29.04.2020**
(21) Application number: 15843457.1
(22) Date of filing: 12.06.2015
(51) Int. Cl.: C09K 5/14

(54) **UV-THICKENING THERMALLY CONDUCTIVE SILICONE GREASE COMPOSITION**
DURCH UV VERDICKENDE WÄRMELEITFÄHIGE SILIKONSCHMIERZUSAMMENSETZUNG
COMPOSITION DE GRAISSE DE SILICONE THERMOCONDUCTRICE ÉPAISSISSANT AUX UV

(30) Priority: 25.09.2014 JP 2014194964
(43) Date of publication of application: 02.08.2017
(73) Proprietor: Shin-Etsu Chemical Co., Ltd., Tokyo 100-0004 (JP)
(72) Inventor: IWATA, Mitsuhiro, Annaka-shi Gunma 379-0224 (JP)
(74) Representative: Ter Meer Steinmeister & Partner
(86) International application number: PCT/JP2015/066971
(87) International publication number: WO 2016/047219

(56) References cited:
- WO-A1-2013/070350
- WO-A1-2013/070350
- WO-A1-2013/161436
- CN-A- 103 665 882
- DE-A1- 10 123 935
- JP-A- 2008 143 980
- JP-A- 2008 510 030
- JP-A- 2010 242 087
- JP-A- 2013 227 374
- US-A1- 2008 277 276
- US-A1- 2010 256 300
- US-A1- 2014 135 416

## Description

### TECHNICAL FIELD

This invention relates to a one-part type UV-thickening, heat-conductive silicone grease composition as defined in claim 1.

### BACKGROUND ART

In conjunction with engine control and powertrain systems in transportation vehicles and body systems for controlling air conditioners, the contents of control become more sophisticated and more systems are necessary for control. Accordingly, the number of electronic control units (ECU) mounted is increasing every year. There is a tendency that the number of electronic components mounted inside is increasing. While a plurality of electronic components and parts of different height generate heat, heat-conductive materials are now requisite to efficiently conduct the heat to casings of die-cast aluminum.

Further, since it is recently required to mount more electronic components and parts within a limited space, their mounting environments (e.g., ambient temperature, humidity, angle, and distance) are more diversified. In the case of engine ECU, for example, there are more chances of installing electronic components and parts vertically in the engine room. This suggests more chances of positioning a heat-conductive material vertically in the site where both vibration and high temperature are applied.

While heat-conductive materials are used in such environments, several proposals are made to prevent the heat-conductive material between the heat source and the cooling member from sagging and falling down, for example, use of heat-conductive silicone adhesive materials, heat-conductive potting materials, and room temperature-curable heat-conductive silicone rubber compositions (see JP-A H08-208993, JP-A S61-157569, JP-A 2004-352947, JP 3543663, and JP 4255287: Patent Documents 1 to 5).

However, since all these materials reach a high hardness and bond to substrates, there are drawbacks that they are least re-workable and apply stresses to the heat-generating electronic components. Also, since the heat-conductive material cannot withstand the repeated stresses due to heat distortion, it may separate from the heat-generating component or crack, leading to a rapid increase of thermal resistance.

Under the circumstances, there was discovered an addition one-part heat-conductive material which has undergone heat crosslinking reaction to a high viscosity (while maintainining flexibility) during its preparation so that the material is sag-controlled (JP-A 2003-301189: Patent Document 6). Since this material is quite flexible despite a high viscosity, its impact of applying stress to the electronic component is weaker than the high-hardness materials. Since this material freely deforms and conforms to an irregular surface, it is suitable to apply to electronic components of different height. However, there is the tradeoff as a matter of course, that is, the problem of difficult coating because of high viscosity.

Recently, a heat-conductive silicone composition having a lower viscosity than the addition one-part heat-conductive material was developed (JP-A 2009-286855: Patent Document 7). Its viscosity is still high. There is a desire to have a heat-conductive silicone composition having better workability and sag control.

The above problem is solved by an addition one-part heat-conductive silicone composition (JP-A 2002-327116: Patent Document 8). That is, this composition is readily dispensable prior to heat curing, has a certain degree of re-working even after heat curing, does not sag after curing, remains as a relatively flexible rubber even after curing, and thus plays the role of a stress relaxing agent. Nevertheless, this addition one-part heat-conductive silicone composition still has a problem to be solved. The problem is that as the addition one-part heat-conductive silicone composition is further reduced in viscosity, the composition becomes flowable so that it may spread over the electronic component immediately after dispensing, failing to establish a heat-dissipating passage if a substantial space is defined between the electronic component and the cooling member.

To solve the problem, a heat-curable, heat-conductive silicone grease composition which has good shape retention despite a low viscosity at the initial and which remains flexible after curing was proposed (JP-A 2013-227374: Patent Document 9). However, in some cases where substrates have poor heat resistance, heat curing is unacceptable. It is thus desired to develop a one-part type heat-conductive silicone composition based on another curing mechanism and having sag control.

As the other curing mechanism, an organopolysiloxane gel composition containing a UV-photoactive platinum complex curing catalyst was proposed (JP 3865638: Patent Document 10). Patent Document 10 refers to the addition of inorganic filler as an optional component, but not to the amount and thermal conductivity of the filler. The organopolysiloxane gel composition is less shelf stable as one-part type.

Patent Document 11 discloses a UV curable composition comprising organopolysiloxane having alkenyl groups and a viscosity of 10-100000 mPa·s at 25°C; an organohydrogenpolysiloxane having at least two SiH groups per molecule, platinum complex; and additives. Patent Document 12 discloses a curable heat conductive composition comprising organopolysiloxane having at least two alkenyl groups per molecule and a viscosity of 100-100,000 mPa·s; an organohydrogenpolysiloxane having at least two SiH groups per molecule; a platinum complex; heat conductive fillers and additives.

### PRIOR ART DOCUMENTS

### PATENT DOCUMENTS

Patent Document 1: JP-A H08-208993
Patent Document 2: JP-A S61-157569
Patent Document 3: JP-A 2004-352947
Patent Document 4: JP 3543663
Patent Document 5: JP 4255287
Patent Document 6: JP-A 2003-301189
Patent Document 7: JP-A 2009-286855
Patent Document 8: JP-A 2002-327116
Patent Document 9: JP-A 2013-227374
Patent Document 10: JP 3865638
Patent Document 11: US 2008/277276 A1
Patent Document 12: WO 2013/161436 A1
Patent Document 13: US 2010/256300 A1
Patent Document 14: US 2014/135416 A1
Patent Document 15: WO 2013/070350 A1

### SUMMARY OF THE INVENTION

### PROBLEMS TO BE SOLVED BY THE INVENTION

An object of the invention, which has been made under the above-mentioned circumstances, is to provide a one-part type UV-thickening, heat-conductive silicone grease composition which has good shape retention despite a low viscosity (or ease of coating) at the initial and which remains flexible (or has low hardness) after curing.

### MEANS FOR SOLVING THE PROBLEMS

Making extensive investigations to attain the above object, the inventor has found that a UV-thickening, heat-conductive silicone grease composition comprising components (A) to (E) as defined in claim 1, which has an absolute viscosity of 30 to 800 Pa·s at 25°C as measured by a Malcom viscometer at a rotational speed of 10 rpm, prior to curing, preferably undergoes a diameter change within 1 mm when the composition is applied onto an aluminum plate so as to form a disk having a diameter of 1 cm (0.5 ml) in a 25°C environment and held horizontal for 24 hours, and has a hardness of 1 to 90 as measured by an Asker C type rubber Durometer after curing, has good shape retention despite a low viscosity and ease of coating, remains flexible and sag-controlled after curing, and is thus expected to exert stress relaxation and repairable. Particularly when an organohydrogenpolysiloxane containing at least two silicon-bonded hydrogen atoms per molecule, the organohydrogenpolysiloxane being free of R¹₂SiO units wherein R¹ is independently a substituted or unsubstituted monovalent hydrocarbon group, and containing the silicon-bonded hydrogen atoms only on side chains, but not at the end, is used, the composition has good shelf stability as one-part type. The invention is predicated on this finding.

Accordingly the invention provides a UV-thickening, heat-conductive silicone grease composition as defined in claim 1. Disclosed are
[1] A UV-thickening, heat-conductive silicone grease composition comprising, as essential components,
   (A) 100 parts by weight of an organopolysiloxane having a viscosity of 50 to 100,000 mPa·s at 25°C and containing at least one alkenyl group per molecule,
   (B) an organohydrogenpolysiloxane containing at least two silicon-bonded hydrogen atoms per molecule in such an amount that the number of Si-H groups divided by the number of alkenyl groups in the composition falls in the range from 0.1 to 5.0,
   (C) an effective amount of a photoactive platinum complex curing catalyst selected from the group consisting of trimethyl(acetylacetonato)platinum complex, trimethyl(2,4-pentanedionate)platinum complex, trimethyl(3,5-heptanedionate)platinum complex, trimethyl(methylacetoacetate)platinum complex, bis(2,4-pentanedionato)platinum complex, bis(2,4-hexanedionato)platinum complex, bis(2,4-heptanedionato)platinum complex, bis(3,5-heptanedionato)platinum complex, bis(1-phenyl-1,3-butanedionato)platinum complex, bis(1,3-diphenyl-1,3-propanedionato)platinum complex, (1,5-cyclooctadienyl)dimethyl platinum complex, (1,5-cyclooctadienyl)diphenyl platinum complex, (1,5-cyclooctadienyl)dipropyl platinum complex, (2,5-norbornadiene)dimethyl platinum complex, (2,5-norbornadiene)diphenyl platinum complex, (cyclopentadienyl)dimethyl platinum complex, (methylcyclopentadienyl)diethyl platinum complex, (trimethylsilylcyclopentadienyl)diphenyl platinum complex, (methylcycloocta-1,5-dienyl)diethyl platinum complex, (cyclopentadienyl)trimethyl platinum complex, (cyclopentadienyl)ethyldimethyl platinum complex, (cyclopentadienyl)acetyldimethyl platinum complex, (methylcyclopentadienyl)trimethyl platinum complex, (methylcyclopentadienyl)trihexyl platinum complex, (trimethylsilylcyclopentadienyl)trimethyl platinum complex, (dimethylphenylsilylcyclopentadienyl)triphenyl platinum complex, and (cyclopentadienyl)dimethyltrimethylsilylmethyl platinum complex, and
   (D) 100 to 20,000 parts by weight of a heat-conductive filler having a thermal conductivity of at least 10 W/m·°C,
      the composition having a viscosity of 30 to 800 Pa·s at 25°C as measured by a Malcom viscometer at a rotational speed of 10 rpm.
[2] The UV-thickening, heat-conductive silicone grease composition of [1] wherein component (B) is free of R¹₂SiO units wherein R¹ is independently a substituted or unsubstituted monovalent hydrocarbon group, and contains the silicon-bonded hydrogen atoms only on side chains, but not at the end.
[3] The UV-thickening, heat-conductive silicone grease composition of [2] wherein component (B) is an organohydrogenpolysiloxane having the general formula (1): 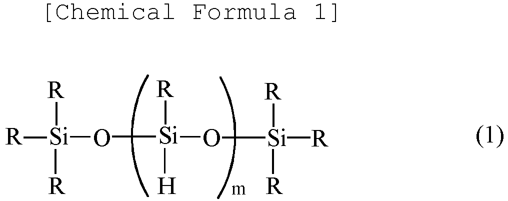 wherein R is a C₁-C₁₀ monovalent hydrocarbon group free of aliphatic unsaturation and m is an integer of 2 to 200.
[4] The UV-thickening, heat-conductive silicone grease composition of any one of [1] to [3], further comprising (E) an organopolysiloxane having the general formula (2): 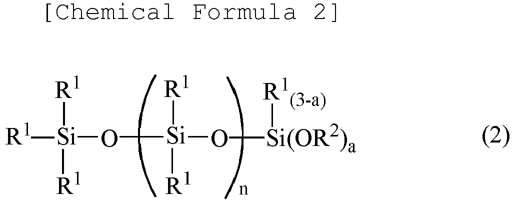 wherein R¹ is independently a substituted or unsubstituted monovalent hydrocarbon group, R² is independently an alkyl, alkoxyalkyl, alkenyl or acyl group, n is an integer of 2 to 100, and a is an integer of 1 to 3, in an amount of 5 to 900 parts by weight per 100 parts by weight of component (A).
[5] The UV-thickening, heat-conductive silicone grease composition of any one of [1] to [4], further comprising (F) 0.1 to 100 parts by weight of finely divided silica per 100 parts by weight of component (A).
[6] The UV-thickening, heat-conductive silicone grease composition of [5] wherein the finely divided silica as component (F) is surface-treated fumed silica.
[7] The UV-thickening, heat-conductive silicone grease composition of any one of [1] to [6], further comprising (H) 0.1 to 20 parts by weight of an adhesion promoter per 100 parts by weight of component (A).
[8] The UV-thickening, heat-conductive silicone grease composition of any one of [1] to [7] which has a shape retention as demonstrated by a diameter change within 1 mm when the composition is applied onto an aluminum plate so as to form a disk having a diameter of 1 cm (0.5 ml) in a 25°C environment and held horizontal at 25°C for 24 hours, and has a hardness of 1 to 90 as measured by an Asker C type rubber Durometer, after UV-thickening.

### ADVANTAGEOUS EFFECTS OF THE INVENTION

The UV-thickening, heat-conductive silicone grease composition of the invention has a low viscosity sufficient to facilitate dispensing and coating and to freely conform to the shape and contour of a heat-generating electronic component. It also has good shape retention so that once it is worked into a shape, it may retain the shape unchanged. A degree of depth cure is controllable by an exposure dose of UV. Further, on thickening by UV exposure, the composition solidifies to a soft state rather than a hard state so that it is sag-controlled when held vertical and applies no extra stresses to the heat source. Moreover it is repairable and shelf stable as one-part type.

### EMBODIMENT FOR CARRYING OUT THE INVENTION

Now the invention is described in detail.

The invention is directed to a UV-thickening, heat-conductive silicone grease composition as defined in claim 1. Hereinafter, a UV-thickening, heat-conductive silicone grease composition comprising the following components is described:
(A) an organopolysiloxane having a viscosity of 50 to 100,000 mPa·s at 25°C and containing at least one alkenyl group per molecule,
(B) an organohydrogenpolysiloxane containing at least two silicon-bonded hydrogen atoms per molecule,
(C) a specific photoactive platinum complex curing catalyst, and
(D) a heat-conductive filler having a thermal conductivity of at least 10 W/m·°C,
and further comprising:
(E) an organopolysiloxane having the general formula (2) : 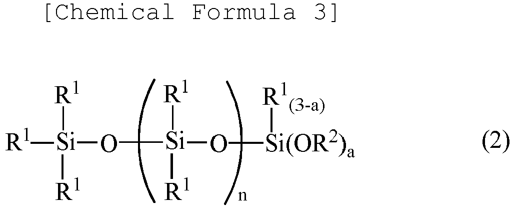 wherein R¹ is independently a substituted or unsubstituted monovalent hydrocarbon group, R² is independently an alkyl, alkoxyalkyl, alkenyl or acyl group, n is an integer of 2 to 100, and a is an integer of 1 to 3,
(F) optional finely divided silica, and
(H) an optional adhesion promoter.

These components are described in detail.

Component (A), which is a base polymer in the present composition, is an organopolysiloxane containing at least one alkenyl group per molecule.

The organopolysiloxane as component (A) contains at least one silicon-bonded alkenyl group, preferably at least 2, and more preferably 2 to 3 silicon-bonded alkenyl groups per molecule. Exemplary alkenyl groups include those of 2 to 4 carbon atoms such as vinyl, allyl and butenyl.

Besides the alkenyl group, silicon-bonded organic groups include substituted or unsubstituted, monovalent hydrocarbon groups of 1 to 10 carbon atoms, preferably 1 to 6 carbon atoms, free of aliphatic unsaturation. Examples include linear alkyl, branched alkyl, cyclic alkyl, aryl, aralkyl, and haloalkyl groups. Exemplary linear alkyl groups include methyl, ethyl, propyl, hexyl, octyl, and decyl. Exemplary branched alkyl groups include isopropyl, isobutyl, tert-butyl, and 2-ethylhexyl. Exemplary cyclic alkyl groups include cyclopentyl and cyclohexyl. Exemplary aryl groups include phenyl and tolyl. Exemplary aralkyl groups include 2-phenylethyl and 2-methyl-2-phenylethyl. Exemplary haloalkyl groups include 3,3,3-trifluoropropyl, 2-(nonafluorobutyl)ethyl, and 2-(heptadecafluorooctyl)ethyl.

Of the silicon-bonded organic groups in component (A), linear alkyl, alkenyl and aryl groups are preferred, and methyl, vinyl and phenyl are especially preferred.

Component (A) has a viscosity at 25°C in the range of 50 to 100,000 mPa·s, preferably in the range of 200 to 50,000 mPa·s, more preferably in the range of 300 to 40,000 mPa·s, and even more preferably in the range of 300 to 30,000 mPa·s. A viscosity within the range ensures that the present composition is easy to handle and work and a cured product of the composition has satisfactory physical properties. Notably, the viscosity is as measured by a rotational viscometer.

The molecular structure of component (A) is not particularly limited. For example, linear, branched, partially branched linear, and dendritic structures are included, with the linear and partially branched linear structures being preferred. Component (A) may be a homopolymer having such molecular structure, a copolymer having such molecular structure, or a mixture of two or more polymers.

Examples of component (A) include molecular both end dimethylvinylsiloxy-blocked dimethylpolysiloxane,
molecular both end methylphenylvinylsiloxy-blocked dimethylpolysiloxane,
molecular both end dimethylvinylsiloxy-blocked dimethylsiloxane/methylphenylsiloxane copolymers, molecular both end dimethylvinylsiloxy-blocked dimethylsiloxane/methylvinylsiloxane copolymers, molecular both end silanol-blocked dimethylsiloxane/methylvinylsiloxane copolymers, molecular both end silanol-blocked dimethylsiloxane/methylvinylsiloxane/methylphenylsiloxane copolymers,
molecular both end trimethylsiloxy-blocked dimethylsiloxane/methylvinylsiloxane copolymers, molecular both end dimethylvinylsiloxy-blocked methyl(3,3,3-trifluoropropyl)polysiloxane, and organosiloxane copolymers consisting of siloxane units of the formula: (CH₃)₃SiO_{1/2}, siloxane units of the formula: (CH₃)₂(CH₂=CH)SiO_{1/2}, siloxane units of the formula: CH₃SiO_{3/2}, and siloxane units of the formula: (CH₃)₂SiO_{2/2}.

It is noted that the organopolysiloxane (A) is essentially composed of siloxane skeleton and is free of alkoxy groups.

Component (B) is an organohydrogenpolysiloxane containing at least two silicon-bonded hydrogen atoms per molecule, which serves as a curing agent in the present composition, i.e., which is combined with components (A) and (E) to induce curing.

The number of silicon-bonded hydrogen atoms in this organohydrogenpolysiloxane is at least 2, preferably 2 to 100, and more preferably 2 to 50.

The organohydrogenpolysiloxane contains silicon-bonded groups other than hydrogen, which include substituted or unsubstituted monovalent hydrocarbon groups of 1 to 10 carbon atoms, preferably 1 to 6 carbon atoms, free of aliphatic unsaturation. Suitable monovalent hydrocarbon groups include linear alkyl, branched alkyl, cyclic alkyl, aryl, aralkyl and haloalkyl groups, examples of which are the same as exemplified for component (A) described above and component (E) to be described later. The preferred silicon-bonded groups other than hydrogen are linear alkyl and aryl groups, with methyl and phenyl being most preferred.

The viscosity at 25°C of the organohydrogenpolysiloxane is not particularly limited, and preferably in the range of 1 to 200 mPa·s, more preferably 1 to 100 mPa·s. A viscosity in the range ensures that the present composition is easy to handle and work, and a cured product of the composition has satisfactory physical properties. Notably, the viscosity is as measured by a rotational viscometer.

The molecular structure of the organohydrogenpolysiloxane is not particularly limited. For example, linear, branched, partially branched linear, cyclic, and dendritic structures are included. The organohydrogenpolysiloxane may be a homopolymer having such molecular structure, a copolymer having such molecular structure, or a mixture of polymers. The silicon-bonded hydrogen atom may be positioned at either one or both of molecular terminal position and molecular non-terminal position.

Examples of the organohydrogenpolysiloxane as component (B) include
molecular both end dimethylhydrogensiloxy-blocked dimethylpolysiloxane,
molecular both end trimethylsiloxy-blocked dimethylsiloxane/methylhydrogensiloxane copolymers, molecular both end dimethylhydrogensiloxy-blocked dimethylsiloxane/methylhydrogensiloxane copolymers, organosiloxane copolymers consisting of siloxane units of the formula: (CH₃)₃SiO_{1/2}, siloxane units of the formula: (CH₃)₂HSiO_{1/2}, and siloxane units of the formula: SiO_{4/2}, and mixtures of two or more of the foregoing.

In order to improve the one-part shelf stability of the composition, the organohydrogenpolysiloxane containing at least two Si-bonded hydrogen atoms is free of R¹₂SiO units wherein R¹ is independently a substituted or unsubstituted monovalent hydrocarbon group, and the silicon-bonded hydrogen atoms are located only on side chains, but not at the end.

The molecular structure of the organohydrogenpolysiloxane for improving the one-part shelf stability of the composition is not particularly limited as long as it is free of R¹₂SiO units wherein R¹ is independently a substituted or unsubstituted monovalent hydrocarbon group and contains the silicon-bonded hydrogen atoms only on side chains, but not at the end. For example, linear, branched, partially branched linear, cyclic, and dendritic structures are included. The organohydrogenpolysiloxane may be a homopolymer having such molecular structure, a copolymer having such molecular structure, or a mixture of polymers.

The organohydrogenpolysiloxane has the general formula (1). 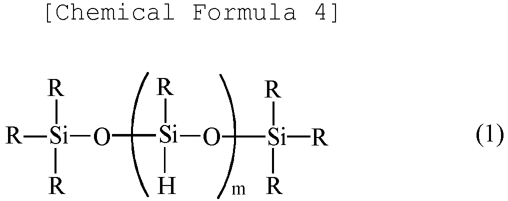 Herein R is a C₁-C₁₀ monovalent hydrocarbon group free of aliphatic unsaturation. Examples include linear alkyl, branched alkyl, cyclic alkyl, aryl, aralkyl and haloalkyl groups. Of these, linear alkyl and aryl groups are preferred, with methyl and phenyl being most preferred. The subscript m is an integer of 2 to 200, preferably 2 to 100, and more preferably 2 to 50.

Examples of the structure of the organohydrogenpolysiloxane as component (B) for improving the one-part shelf stability of the composition include Me₃SiO(MeHSiO)₈SiMe₃, Me₃SiO(MeHSiO)₁₃SiMe₃, and Me₃SiO(MeHSiO)₃₈SiMe₃ wherein Me stands for methyl, and mixtures of two or more of the foregoing.

Notably, the organohydrogenpolysiloxane is basically composed of siloxane skeleton and free of alkoxy groups. It is an essential component for improving the one-part shelf stability of the composition.

The organohydrogenpolysiloxane as component (B) is used such that the amount of silicon-bonded hydrogen atoms (i.e., Si-H groups) in component (B) is 0.1 to 5.0 moles, preferably 0.1 to 3.0 moles, and more preferably 0.1 to 1.5 moles per mole of silicon-bonded alkenyl groups in components (A) and (E). As long as the amount is in the range, the present composition is effectively curable to an adequate hardness, with a minimized likelihood of applying stresses to the heat-dissipating component.

Component (C) used herein is a photoactive platinum complex curing catalyst, which exerts a catalytic action of promoting addition reaction of component (B) to components (A) and (E) when activated upon UV exposure. The compound used as the photoactive platinum complex curing catalyst (C) is a β-diketone platinum complex or a platinum complex having a cyclic diene compound as ligand.

Examples of the β-diketone platinum complex include trimethyl(acetylacetonato)platinum complex, trimethyl(2,4-pentanedionate)platinum complex, trimethyl(3,5-heptanedionate)platinum complex, trimethyl(methylacetoacetate)platinum complex, bis(2,4-pentanedionato)platinum complex, bis(2,4-hexanedionato)platinum complex, bis(2,4-heptanedionato)platinum complex, bis(3,5-heptanedionato)platinum complex, bis(1-phenyl-1,3-butanedionato)platinum complex, and bis(1,3-diphenyl-1,3-propanedionato)platinum complex.

Examples of the platinum complex having a cyclic diene compound as ligand include (1,5-cyclooctadienyl)dimethyl platinum complex, (1,5-cyclooctadienyl)diphenyl platinum complex, (1,5-cyclooctadienyl)dipropyl platinum complex, (2,5-norbornadiene)dimethyl platinum complex, (2,5-norbornadiene)diphenyl platinum complex, (cyclopentadienyl)dimethyl platinum complex, (methylcyclopentadienyl)diethyl platinum complex, (trimethylsilylcyclopentadienyl)diphenyl platinum complex, (methylcycloocta-1,5-dienyl)diethyl platinum complex, (cyclopentadienyl)trimethyl platinum complex, (cyclopentadienyl)ethyldimethyl platinum complex, (cyclopentadienyl)acetyldimethyl platinum complex, (methylcyclopentadienyl)trimethyl platinum complex, (methylcyclopentadienyl)trihexyl platinum complex, (trimethylsilylcyclopentadienyl)trimethyl platinum complex, (dimethylphenylsilylcyclopentadienyl)triphenyl platinum complex, and (cyclopentadienyl)dimethyltrimethylsilylmethyl platinum complex.

Component (C) is used in a catalytic or effective amount. Specifically, component (C) is used in such an amount as to give 1 to 5,000 ppm, preferably 10 to 500 ppm of platinum metal based on the total weight of components (A), (B), and (E). With less than 1 ppm of platinum, the composition may be substantially retarded in addition reaction upon UV exposure or may not cure. With more than 5,000 ppm of platinum, the composition may lose one-part shelf stability or the cured product may have less heat resistance.

In the practice of the invention, (G) an inhibitor may be used for the purpose of suppressing the catalytic activity of component (C) and further improving the one-part shelf stability. The inhibitor serves to suppress the progress of hydrosilylation reaction at a storage temperature of room temperature or below for thereby prolonging the shelf life and pot life. The inhibitor may be selected from well-known reaction inhibitors. For example, acetylene compounds, nitrogen compounds, and organic phosphorus compounds are useful. Examples include acetylene compounds such as 1-ethynyl-1-cyclohexanol and 3-butyn-1-ol, nitrogen compounds such as triallyl isocyanurate and triallyl isocyanurate derivatives, and organic phosphorus compounds such as triphenylphosphine.

The amount of component (G) used is preferably 0.01 to 1.5 parts, more preferably 0.01 to 1.0 part by weight per 100 parts by weight of component (A). Less than 0.01 part by weight of component (G) may fail to achieve the desired shelf life or pot life whereas more than 1.5 parts by weight may adversely affect UV-thickening.

The inhibitor may be diluted with a solvent such as toluene, prior to use, in order to facilitate its dispersion in the silicone grease composition.

Component (D) is a heat-conductive filler having a thermal conductivity. If the thermal conductivity of the filler is less than 10 W/m·°C, the present composition has a lower thermal conductivity. Thus the filler should have a thermal conductivity of at least 10 W/m·°C, preferably at least 15 W/m·°C.

Suitable heat-conductive fillers include aluminum powder, copper powder, silver powder, nickel powder, gold powder, alumina powder, zinc oxide powder, magnesium oxide powder, aluminum nitride powder, boron nitride powder, silicon nitride powder, diamond powder, and carbon powder. As long as their thermal conductivity is at least 10 W/m·°C, any desired fillers may be used alone or in admixture of two or more.

The average particle size of the heat-conductive filler is preferably in a range of 0.1 to 300 µm, more preferably 0.1 to 200 µm. If the average particle size is less than 0.1 µm, the present composition may not become greasy and lose extensibility. With an average particle size in excess of 300 µm, the present composition may lose uniformity. The shape of the filler may be irregular, spherical or otherwise. Notably the average particle size may be determined, for example, as a weight average value (or median diameter) by the laser light diffraction method.

The amount of the heat-conductive filler loaded as component (D) is in a range of 100 to 20,000 parts, preferably 500 to 15,000 parts by weight per 100 parts by weight of component (A). Less than 100 parts of the filler fails to gain the desired thermal conductivity. If the amount is more than 20,000 parts, the present composition does not become greasy and loses extensibility.

Component (E) is an organopolysiloxane of the general formula (2), preferably having a viscosity of 5 to 100,000 mPa·s at 25°C.

Component (E) plays the important role of maintaining the composition as UV-thickened at a low hardness and reducing its initial viscosity. 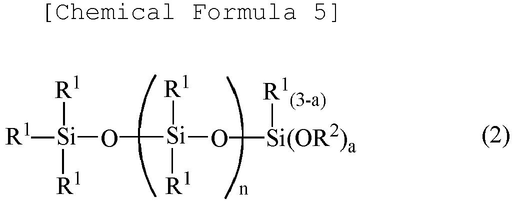 Herein R¹ is independently a substituted or unsubstituted monovalent hydrocarbon group, R² is independently an alkyl, alkoxyalkyl, alkenyl or acyl group, n is an integer of 2 to 100, and a is an integer of 1 to 3.

In formula (2), R¹ is independently a substituted or unsubstituted monovalent hydrocarbon group, preferably of 1 to 10 carbon atoms, more preferably 1 to 6 carbon atoms, and even more preferably 1 to 3 carbon atoms. Examples include linear alkyl, branched alkyl, cyclic alkyl, alkenyl, aryl, aralkyl, and haloalkyl groups. Exemplary linear alkyl groups include methyl, ethyl, propyl, hexyl, octyl, and decyl. Exemplary branched alkyl groups include isopropyl, isobutyl, tert-butyl, and 2-ethylhexyl. Exemplary cyclic alkyl groups include cyclopentyl and cyclohexyl. Exemplary alkenyl groups include vinyl and allyl. Exemplary aryl groups include phenyl and tolyl. Exemplary aralkyl groups include 2-phenylethyl and 2-methyl-2-phenylethyl. Exemplary haloalkyl groups include 3,3,3-trifluoropropyl, 2-(nonafluorobutyl)ethyl, and 2-(heptadecafluorooctyl)ethyl. R¹ is preferably methyl or phenyl.

R² is independently an alkyl, alkoxyalkyl, alkenyl or acyl group. Exemplary alkyl groups include linear alkyl, branched alkyl, and cyclic alkyl groups as exemplified for R¹. Exemplary alkoxyalkyl groups include methoxyethyl and methoxypropyl. Exemplary alkenyl groups include those exemplified for R¹. Exemplary acyl groups include acetyl and octanoyl. Preferably R² is alkyl, with methyl and ethyl being most preferred.

The subscript n is an integer of 2 to 100, preferably 10 to 50, and a is an integer of 1 to 3, preferably 3.

Typically, component (E) has a viscosity at 25°C of 5 to 100,000 mPa·s, preferably 5 to 5,000 mPa·s. If the viscosity is less than 5 mPa·s, the resulting silicone grease composition may tend to exert oil bleeding and to sag. If the viscosity exceeds 100,000 mPa·s, the resulting silicone grease composition may significantly lose fluidity and become poor in coating operation. Notably, the viscosity is as measured by a rotational viscometer.

Preferred examples of component (E) are given below. 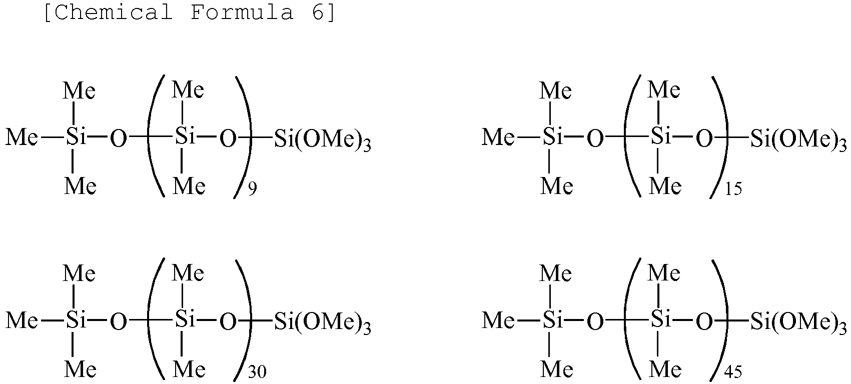 Herein Me stands for methyl.

The amount of component (E), if compounded, is preferably 10 to 900 parts, more preferably 20 to 700 parts by weight per 100 parts by weight of component (A). If the amount of component (E) is less than 5 parts by weight, the composition may become hard, i.e., may not remain flexible, after heating. If the amount of component (E) exceeds 900 parts by weight, the composition may be difficult to cure.

Notably, in the practice of the invention, it is acceptable to use an organopolysiloxane free of silicon-bonded alkenyl in addition to the foregoing components (A) and (E). Examples of the additional organopolysiloxane include molecular both end silanol-blocked dimethylpolysiloxane, molecular both end silanol-blocked dimethylsiloxane/methylphenylsiloxane copolymers, molecular both end trimethoxysiloxy-blocked dimethylpolysiloxane, molecular both end trimethoxysiloxy-blocked dimethylsiloxane/methylphenylsiloxane copolymers, molecular both end methyldimethoxysiloxy-blocked dimethylpolysiloxane, molecular both end triethoxysiloxy-blocked dimethylpolysiloxane, molecular both end trimethoxysilylethyl-blocked dimethylpolysiloxane, and mixtures of two or more of the foregoing.

Component (F) is finely divided silica for imparting shape retention to the composition. As the finely divided silica, surface-treated fumed silica is preferably used. The surface treatment improves the dispersion of silica in components (A), (B) and (E) and enables uniform dispersion. Also the mutual action of surface-treated fumed silica and the interaction of surface-treated fumed silica and components (A), (B) and (E) impart shape retention.

Effective surface treating agents include chlorosilanes, silazanes, and siloxanes. Exemplary of the surface treating agent are methyltrichlorosilane, dimethyldichlorosilane, trimethylchlorosilane, hexamethyldisilazane, octamethylcyclotetrasiloxane, and α,ω-trimethylsilyldimethylpolysiloxane.

Also component (F) should preferably have a specific surface area (BET method) of at least 50 m²/g, more preferably at least 100 m²/g. With a surface area of less than 50 m²/g, the present composition may have poor shape retention. The specific surface area (BET method) is preferably up to 500 m²/g, more preferably up to 300 m²/g, because shape retention is enhanced.

The amount of component (F) added is in a range of 0 to 100 parts because the composition with more than 100 parts of component (F) does not become greasy and loses extensibility. The amount of component (F), if used, is 0.1 to 100 parts, preferably 1 to 80 parts, and more preferably 1 to 50 parts by weight per 100 parts by weight of component (A).

Besides the above components, any well-known additives may be added to the UV-thickening, heat-conductive silicone grease composition insofar as the objects of the invention are not impaired. Suitable additives include, for example, hindered phenol based antioxidants, reinforcing and non-reinforcing fillers such as calcium carbonate, and thixotropic agents such as polyethers. If necessary, colorants such as pigments and dyes may be added.

Also, besides components (A) to (F), (H) an adhesion promoter, for example, silane coupling agents as shown below may be added in order to make the composition bondable to various adherends insofar the benefits of the invention are not impaired. Notably, the amount of the adhesion promoter, if used, is preferably 0.1 to 20 parts by weight per 100 parts by weight of component (A). 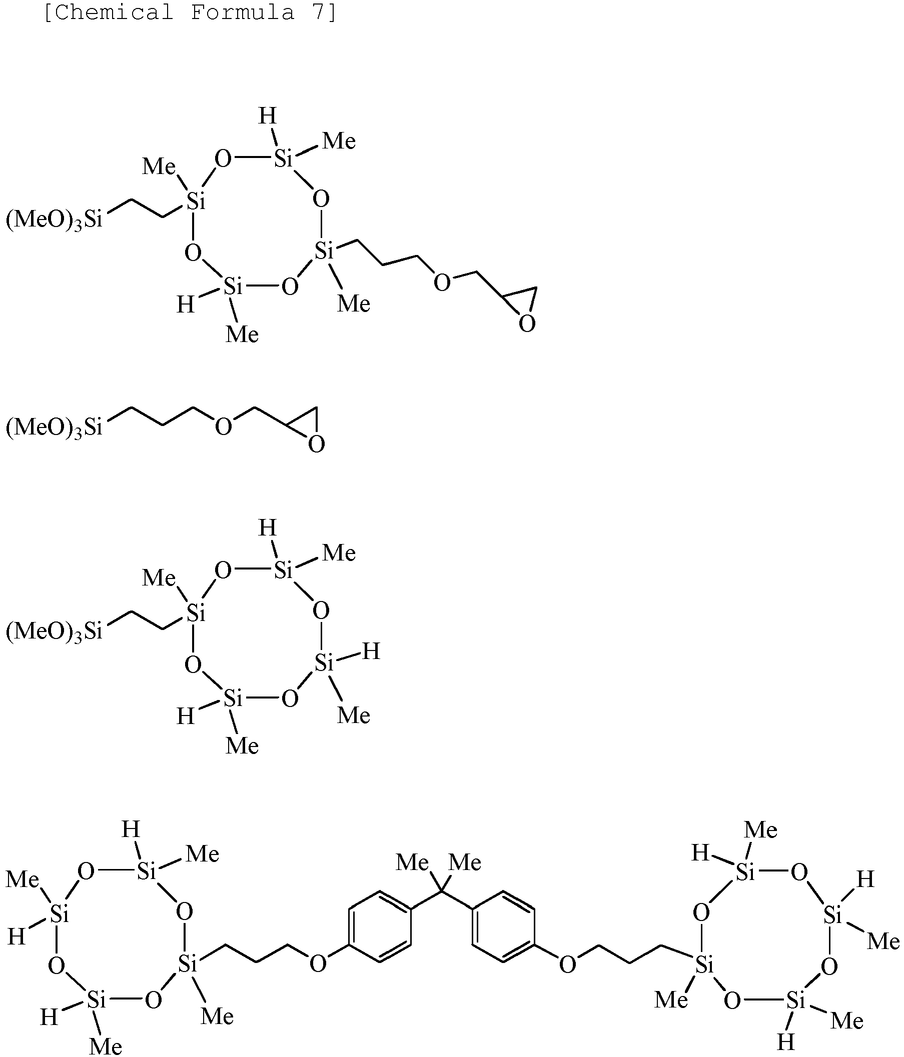 Herein Me stands for methyl.

The UV-thickening, heat-conductive silicone grease composition of the invention may be prepared by mixing the above components by a well-known method until uniform.

The UV-thickening, heat-conductive silicone grease composition thus obtained should preferably have an absolute viscosity at 25°C of 30 to 800 Pa·s, more preferably 30 to 600 Pa·s, as measured by a Malcom viscometer. If the viscosity is less than 30 Pa·s, the dispensability of the composition is too high and not adjustable. If the viscosity exceeds 800 Pa·s, the composition may not be regarded effectively dispensable. Notably the initial viscosity of the UV-thickening, heat-conductive silicone grease composition can be set within the range by adjusting the balance of components (A) and (B).

When the UV-thickening, heat-conductive silicone grease composition is applied onto an aluminum plate so as to form a disk having a diameter of 1 cm (0.5 ml) and the disk is held horizontal for 24 hours in a 25°C environment, the composition should preferably undergo a diameter change within 1 mm, especially within 0.5 mm. A diameter change in excess of 1 mm may indicate a shortage of shape retention. In order that the UV-thickening, heat-conductive silicone grease composition undergo a diameter change within 1 mm under the above conditions, the recommended amount of component (F) added is 0.1 to 100 parts by weight per 100 parts by weight of component (A).

Since the UV-thickening, heat-conductive silicone grease composition of the invention has a low viscosity at the initial, it may deform freely in conformity with the contour (recesses and bosses). Since the composition has shape retention ability, it can retain the shape after deformation. Because of a low viscosity and shape retention ability, even when a heat-generating part is of complex shape, the composition can readily conform to every corner and retain its shape.

Unlike conventional heat-conductive silicone adhesive materials, heat-conductive silicone potting materials and room temperature-curable, heat-conductive silicone rubber compositions, the UV-thickening, heat-conductive silicone grease composition of the invention is characterized by curing to a soft or flexible state on UV exposure.

With respect to UV exposure conditions for thickening (viscosity buildup) the UV-thickening, heat-conductive silicone grease composition of the invention, for example, when the composition is thickened at a thickness of 1 mm, the dose of exposure energy is preferably at least 2,000 mJ/cm², more preferably at least 5,000 mJ/cm².

Suitable UV sources used for thickening the UV-thickening, heat-conductive silicone grease composition of the invention include typical mercury vapor lamps and metal halide lamps designed to emit UV energy in various UV wavelength ranges, for example, an LED lamp capable of emitting light at a specific single wavelength of 365 nm.

The UV wavelength range used for thickening the UV-thickening, heat-conductive silicone grease composition is desirably 220 to 450 nm.

It is noted that the UV-thickening, heat-conductive silicone grease composition of the invention, after UV exposure, has a hardness at 25°C of preferably 1 to 90, more preferably 10 to 80, as measured by an Asker C type rubber Durometer. If the hardness is less than the range, the composition may be too soft and sag. If the hardness is above the range, the composition may be too hard and apply a stress to the heat source. The hardness of the UV-thickening, heat-conductive silicone grease composition as cured may be set within the range by adjusting the number of Si-H groups in component (B) divided by the total number of alkenyl groups in components (A) and (E).

Since the UV-thickening, heat-conductive silicone grease composition thus obtained remains soft even after curing, it is anti-sagging and effectively repairable, and eliminates any concern of applying substantial stresses to electronic components.

### EXAMPLES

Examples and Comparative Examples are given below for illustrating the invention, but the invention is not limited thereto. Examples are shown for the purpose of more clearly demonstrating the superiority of the invention. In the formulae below, Me stands for methyl.

First, the following components were provided.
Component (A)
   A-1: dimethylpolysiloxane blocked at both ends with dimethylvinylsilyl and having a viscosity of 600 mPa·s at 25°C
   A-2: dimethylpolysiloxane blocked at both ends with dimethylvinylsilyl and having a viscosity of 30,000 mPa·s at 25°C
Component (B)
   B-1: Me₃SiO(MeHSiO)SiMe₃
   B-2: Me₃SiO(MeHSiO)₃₈SiMe₃
   B-3: Me₃SiO(Me₂SiO)₁₈(MeHSiO)₂₀SiMe₃
   B-4: Me₃SiO(Me₂SiO)₂₄(MeHSiO)₄SiMe₃
Component (C)
   C-1: 1 wt% solution of bis(2,4-pentanedionato)platinum complex in 2-(2-butoxyethoxy)ethyl acetate
   C-2: chloroplatinic acid-1,3-divinyltetramethyldisiloxane complex (for comparison) prepared in the same platinum concentration as C-1
Component (D)
   D-1: alumina powder with an average particle size of 10 µm (thermal conductivity 27 W/m·°C)
   D-2: aluminum powder with an average particle size of 12 µm (thermal conductivity 236 W/m·°C)
Component (E)
   E-1: organopolysiloxane of the following formula 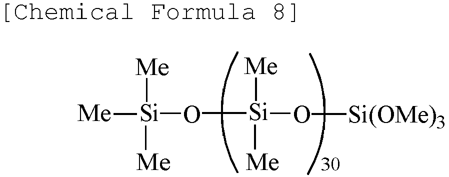
Component (F)
   F-1: fumed silica having a BET specific surface area of 120 m²/g and made hydrophobic by surface treatment with dimethyldichlorosilane
Component (H)
   H-1: adhesion promoter of the following formula

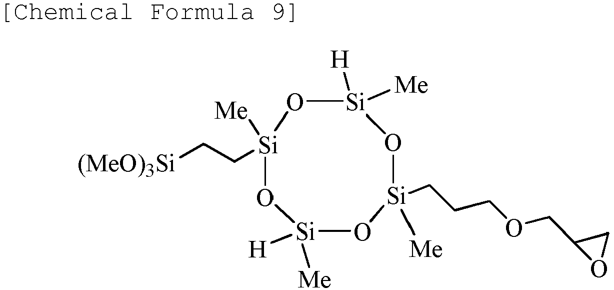

### [Examples 1 to 7 and Comparative Example 1]

Compositions of Examples 1 to 7 and Comparative Example 1 were prepared by mixing the above components (A) to (H) in the amounts shown in Table 1. Specifically, the amounts shown in Table 1 of components (A), (D) and (E) were fed into a 5-L gate mixer (trade name: 5-L Planetary Mixer by Inoue Mfg., Inc.) where the contents were deaerated, heated, and mixed at 150°C for 2 hours. Thereafter, the contents were cooled to room temperature, components (B) and (F) were added thereto, and the contents were mixed at room temperature until uniform. Further, component (C) was added thereto, and the contents were deaerated and mixed at room temperature until uniform. Optionally, component (H) was added, and the contents were mixed at room temperature until uniform. The compositions thus obtained were evaluated for viscosity, cured hardness, thermal conductivity, shape retention, and shelf stability by the following methods. The results are also shown in Table 1. The composition of Comparative Example 1 could not be evaluated for these properties because it thickened and gelled immediately after addition of component (C).

### [Initial viscosity test]

The initial viscosity of the UV-thickening, heat-conductive silicone grease composition is a value at 25°C as measured by a Malcom viscometer (type PC-10AA).

### [Cured hardness test]

The UV-thickening, heat-conductive silicone grease composition was applied onto a glass plate, overlaid with a glass plate so as to provide a cured thickness of 1 mm, and exposed to UV using a conveyor type UV exposure unit equipped with a high-pressure mercury lamp (80 W/cm) by Japan Battery Co., Ltd. under UV exposure conditions: a distance between the lamp and the sample to be exposed of 10 cm and a conveyor moving speed or sample speed of 1 m/min. The step of passing the sample under the lamp was performed four times. The glass plates were then removed, yielding a cured product. The cured product was measured for hardness at 25°C by an Asker C type rubber Durometer. The dose of exposure energy was 2,000 mJ/cm² as monitored at 365 nm by a UV meter (UIT-102 by Ushio Inc.).

### [Thermal conductivity test]

The thermal conductivity of the UV-thickening, heat-conductive silicone grease composition prior to curing was measured at 25°C using a hot disk method thermal property meter TPA-501 (Kyoto Electronics Mfg. Co., Ltd.).

### [Shape retention test]

In a 25°C environment, 0.5 ml of the UV-thickening, heat-conductive silicone grease composition was applied onto an aluminum plate to form a disk having a diameter of about 1 cm. The disk was held for one day (24 hours) immediately after the completion of application, and measured for its diameter. A change of diameter (mm) was computed and used as an index of shape retention. The less the moving distance, the better is shape retention.

### [Shelf stability test]

The drying time in a 25°C environment was determined while confirming the dry state with finger touch. The longer the drying time, the better is one-part shelf stability.

**[Table 1]**

| Formulation (pbw) | | Example | | | | | | | Comparative Example |
|---|---|---|---|---|---|---|---|---|---|
| | | 1 | 2 | 3 | 4 | 5 | 6 | 7 | 1 |
| Component (A) | A-1 | 75 | 75 | 75 | 75 | 75 | 75 | 75 | 75 |
| | A-2 | 10 | 10 | 10 | 10 | 10 | 10 | 10 | 10 |
| Component (B) | B-1 | 0.25 | 0.25 | 0 | 0 | 0 | 0 | 0 | 0.25 |
| | B-2 | 0 | 0 | 0.22 | 0.22 | 0.22 | 0 | 0 | 0 |
| | B-3 | 0 | 0 | 0 | 0 | 0 | 0.6 | 0 | 0 |
| | B-4 | 0 | 0 | 0 | 0 | 0 | 0 | 2.2 | 0 |
| Component (C) | C-1 | 1.2 | 1.2 | 1.2 | 1.2 | 1.2 | 1.2 | 1.2 | 0 |
| | C-2 | 0 | 0 | 0 | 0 | 0 | 0 | 0 | 0.6 |
| Component (D) | D-1 | 1,000 | 1,000 | 1,000 | 0 | 0 | 1,000 | 1,000 | 1,000 |
| | D-2 | 0 | 0 | 0 | 600 | 600 | 0 | 0 | 0 |
| Component (E) | E-1 | 15 | 15 | 15 | 15 | 15 | 15 | 15 | 15 |
| Component (F) | F-1 | 2.5 | 0 | 0 | 2.5 | 0 | 2.5 | 2.5 | 0 |
| Component (H) | H-1 | 0.1 | 0.1 | 0.1 | 0 | 0 | 0 | 0 | 0 |
| Si-H/Si-Vi (mol/mol) | | 0.4 | 0.4 | 0.4 | 0.4 | 0.4 | 0.4 | 0.4 | 0.4 |
| Test results | | | | | | | | | |
| Viscosity (Pa·s) | | 94 | 81 | 92 | 126 | 111 | 88 | 71 | - |
| Thermal conductivity (W/m·°C) | | 3.0 | 3.0 | 3.0 | 3.0 | 3.0 | 3.0 | 2.8 | - |
| Hardness (Asker C) | | 31 | 30 | 26 | 20 | 19 | 51 | 40 | - |
| Shape retention (mm) | | 0 | 0.1 | 0.1 | 0 | 0.1 | 0 | 0 | - |
| Shelf stability (day) | | 180> | 180> | 180> | 180> | 180> | <2 | <5 | - |

## Claims

1. A one-part type UV-thickening, heat-conductive silicone grease composition comprising, as essential components,
(A) 100 parts by weight of an organopolysiloxane having a viscosity of 50 to 100,000 mPa·s at 25°C and containing at least one silicon-bonded alkenyl group per molecule,
(B) an organohydrogenpolysiloxane containing at least two silicon-bonded hydrogen atoms per molecule having the general formula (1): 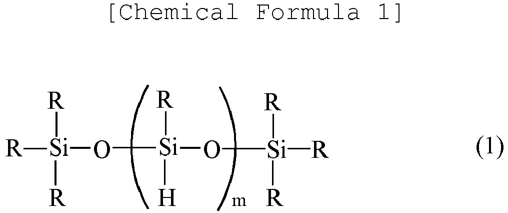 wherein R is a C₁-C₁₀ monovalent hydrocarbon group free of aliphatic unsaturation and m is an integer of 2 to 200, in such an amount that the number of Si-H groups divided by the number of silicon-bonded alkenyl groups in the composition falls in the range from 0.1 to 5.0,
(C) an effective amount of a photoactive platinum complex curing catalyst selected from the group consisting of
trimethyl(acetylacetonato)platinum complex,
trimethyl(2,4-pentanedionate)platinum complex,
trimethyl(3,5-heptanedionate)platinum complex,
trimethyl(methylacetoacetate)platinum complex,
bis(2,4-pentanedionato)platinum complex,
bis(2,4-hexanedionato)platinum complex,
bis(2,4-heptanedionato)platinum complex,
bis(3,5-heptanedionato)platinum complex,
bis(1-phenyl-1,3-butanedionato)platinum complex,
bis(1,3-diphenyl-1,3-propanedionato)platinum complex,
(1,5-cyclooctadienyl)dimethyl platinum complex,
(1,5-cyclooctadienyl)diphenyl platinum complex,
(1,5-cyclooctadienyl)dipropyl platinum complex,
(2,5-norbornadiene)dimethyl platinum complex,
(2,5-norbornadiene)diphenyl platinum complex,
(cyclopentadienyl)dimethyl platinum complex,
(methylcyclopentadienyl)diethyl platinum complex,
(trimethylsilylcyclopentadienyl)diphenyl platinum complex,
(methylcycloocta-1,5-dienyl)diethyl platinum complex,
(cyclopentadienyl)trimethyl platinum complex,
(cyclopentadienyl)ethyldimethyl platinum complex,
(cyclopentadienyl)acetyldimethyl platinum complex,
(methylcyclopentadienyl)trimethyl platinum complex,
(methylcyclopentadienyl)trihexyl platinum complex,
(trimethylsilylcyclopentadienyl)trimethyl platinum complex,
(dimethylphenylsilylcyclopentadienyl)triphenyl platinum complex, and
(cyclopentadienyl)dimethyltrimethylsilylmethyl platinum complex, and
(D) 100 to 20,000 parts by weight of a heat-conductive filler having a thermal conductivity of at least 10 W/m·°C, and
E) an organopolysiloxane having the general formula (2) : 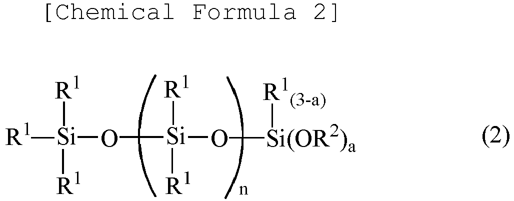 wherein R¹ is independently a substituted or unsubstituted monovalent hydrocarbon group, R² is independently an alkyl, alkoxyalkyl, alkenyl or acyl group, n is an integer of 2 to 100, and a is an integer of 1 to 3, in an amount of 5 to 900 parts by weight per 100 parts by weight of component (A),
the composition having a viscosity of 30 to 800 Pa·s at 25°C as measured by a Malcom viscometer at a rotational speed of 10 rpm.

2. The UV-thickening, heat-conductive silicone grease composition of claim 1 wherein component (B) is free of R¹₂SiO units wherein R¹ is independently a substituted or unsubstituted monovalent hydrocarbon group, and contains the silicon-bonded hydrogen atoms only on side chains, but not at the end.

3. The UV-thickening, heat-conductive silicone grease composition of claim 1 or 2, further comprising (F) 0.1 to 100 parts by weight of finely divided silica per 100 parts by weight of component (A).

4. The UV-thickening, heat-conductive silicone grease composition of claim 3 wherein the finely divided silica as component (F) is surface-treated fumed silica.

5. The UV-thickening, heat-conductive silicone grease composition of any one of claims 1 to 4, further comprising (H) 0.1 to 20 parts by weight of an adhesion promoter per 100 parts by weight of component (A).

6. The UV-thickening, heat-conductive silicone grease composition of any one of claims 1 to 5 which has a shape retention as demonstrated by a diameter change within 1 mm when the composition is applied onto an aluminum plate so as to form a disk having a diameter of 1 cm (0.5 ml) in a 25°C environment and held horizontal at 25°C for 24 hours, and has a hardness of 1 to 90 as measured by an Asker C type rubber Durometer, after UV-thickening.

7. The UV-thickening, heat-conductive silicone grease composition of any one of claims 1 to 6, wherein the number of Si-H groups divided by the number of silicon-bonded alkenyl groups in the composition is in the range from 0.1 to 0.4

## Patentansprüche

1. Durch UV-verdickende, wärmeleitfähige Silikon-Schmierzusammensetzung vom Einkomponententyp, umfassend als wesentliche Komponenten
(A) 100 Gewichtsteile eines Organopolysiloxans mit einer Viskosität von 50 bis 100.000 mPA·s bei 25 °C und enthaltend mindestens eine siliziumgebundene Alkenylgruppe pro Molekül,
(B) ein Organowasserstoffpolysiloxan, enthaltend mindestens zwei siliziumgebundene Wasserstoffatome pro Molekül mit der allgemeinen Formel (1): 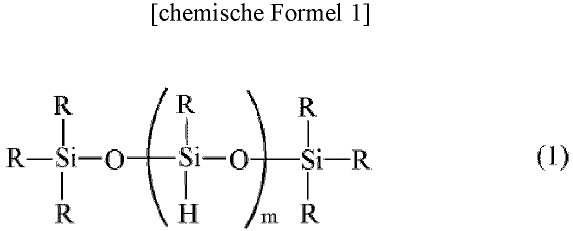 worin R eine keine aliphatische Ungesättigtheit aufweisende, einwertige C₁-C₁₀-Kohlenwasserstoffgruppe ist und m eine ganze Zahl von 2 bis 200 ist, in solch einer Menge, dass die Anzahl an Si-H-Gruppen dividiert durch die Anzahl siliziumgebundener Alkenylgruppen in der Zusammensetzung in den Bereich von 0,1 bis 5,0 fällt,
(C) eine wirksame Menge eines photoaktiven Platinkomplex-Härtungskatalysators, gewählt aus der Gruppe, bestehend aus Trimethyl(acetylacetonato)platin-Komplex,
Trimethyl(2,4-pentandionat)platin-Komplex,
Trimethyl(3,5-heptandionat)platin-Komplex,
Trimethyl(methylacetoacetat)platin-Komplex,
Bis(2,4-pentandionato)platin-Komplex,
Bis(2,4-hexandionato)platin-Komplex,
Bis(2,4-heptandionato)platin-Komplex,
Bis(3,5-heptandionato)platin-Komplex,
Bis(1-phenyl-1,3-butandionato)platin-Komplex,
Bis(1,3-diphenyl-1,3-propandionato)platin-Komplex,
(1,5-Cyclooctadienyl)dimethyl-Platin-Komplex,
(1,5-Cyclooctadienyl)diphenyl-Platin-Komplex,
(1,5-Cyclooctadienyl)dipropyl-Platin-Komplex,
(2,5-Norbornadien)dimethyl-Platin-Komplex,
(2,5-Norbornadien)diphenyl-Platin-Komplex,
(Cyclopentadienyl)dimethyl-Platin-Komplex,
(Methylclyclopentadienyl)diethyl-Platin-Komplex,
(Trimethylsilylcyclopentadienyl)diphenyl-Platin-Komplex,
(Methylcycloocta-1,5-dienyl)diethyl-Platin-Komplex,
(Cyclopentadienyl)trimethyl-Platin-Komplex,
(Cyclopentadienyl)ethyldimethyl-Platin-Komplex,
(Cyclopentadienyl)acetyldimethyl-Platin-Komplex,
(Methylcyclopentadienyl)trimethyl-Platin-Komplex,
(Methylcyclopentadienyl)trihexyl-Platin-Komplex,
(Trimethylsilylcyclopentadienyl)trimethyl-Platin-Komplex,
(Dimethylphenylsilylcyclopentadienyl)triphenyl-Platin-Komplex, und
(Cyclopentadienyl)dimethyltrimethylsilylmethyl-Platin-Komplex, und
(D) 100 bis 20.000 Gewichtsteile eines wärmeleitfähigen Füllstoffs mit einer thermischen Leitfähigkeit von mindestens 10 W/m·°C, und
(E) ein Organopolysiloxan mit der allgemeinen Formel (2): 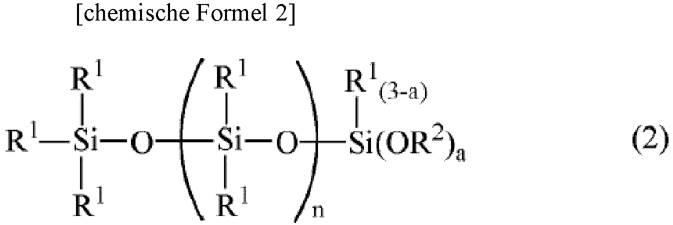 worin R¹ unabhängig eine substituierte oder unsubstituierte, einwertige Kohlenwasserstoffgruppe ist, R² unabhängig eine Alkyl-, Alkoxyalkyl-, Alkenyl- oder Acylgruppe ist, n eine ganze Zahl von 2 bis 100 ist, und a eine ganze Zahl von 1 bis 3 ist, in einer Menge von 5 bis 900 Gewichtsteilen pro 100 Gewichtsteilen an Komponente (A),
wobei die Zusammensetzung eine Viskosität von 30 bis 800 Pa·s bei 25°C aufweist, gemessen durch ein Malcom-Viskosimeter bei einer Rotationsgeschwindigkeit von 10 Upm.

2. Durch UV verdickende, wärmeleitfähige Silikon-Schmierzusammensetzung nach Anspruch 1, wobei Komponente (B) frei an R¹₂SiO-Einheiten ist, worin R¹ unabhängig eine substituierte oder unsubstituierte, einwertige Kohlenwasserstoffgruppe ist, und die siliziumgebundenen Wasserstoffatome nur an Seitenketten aber nicht am Ende enthält.

3. Durch UV verdickende, wärmeleitfähige Silikon-Schmierzusammensetzung nach Anspruch 1 oder 2, weiterhin umfassend (F) 0,1 bis 100 Gewichtsteile fein verteiltes Silica pro 100 Gewichtsteile an Komponente (A).

4. Durch UV verdickende, wärmeleitfähige Silikon-Schmierzusammensetzung nach Anspruch 3, wobei das fein verteilte Silica als Komponente (F) oberflächenbehandelte pyrogene Kieselsäure ist.

5. Durch UV verdickende, wärmeleitfähige Silikon-Schmierzusammensetzung nach irgendeinem der Ansprüche 1 bis 4, weiterhin umfassend (H) 0,1 bis 20 Gewichtsteile eines Adhäsionspromotors pro 100 Gewichtsteile an Komponente (A).

6. Durch UV verdickende, wärmeleitfähige Silikon-Schmierzusammensetzung nach irgendeinem der Ansprüche 1 bis 5, welche eine Formbeständigkeit, wie demonstriert durch eine Durchmesseränderung, innerhalb 1 mm aufweist, wenn die Zusammensetzung auf eine Aluminiumplatte aufgebracht wird, um eine Schreibe mit einem Durchmesser von 1 cm (0,5 ml) in einer 25°C Umgebung zu bilden und bei 25°C während 24 Stunden horizontal gehalten wird, und welche eine Härte von 1 bis 90 aufweist, gemessen durch ein Asker C-Typ-Kautschuk-Durometer, nach UV-Verdickung.

7. Durch UV verdickende, wärmeleitfähige Silikon-Schmierzusammensetzung nach irgendeinem der Ansprüche 1 bis 6, wobei die Anzahl an Si-H-Gruppen dividiert durch die Anzahl an siliziumgebundenen Alkenylgruppen in der Zusammensetzung im Bereich von 0,1 bis 0,4 liegt.

## Revendications

1. Composition de graisse silicone thermoconductrice épaississante aux UV en une seule partie, comprenant comme composants essentiels,
(A) 100 parties en poids d'un organopolysiloxane ayant une viscosité de 50 à 100 000 mPa.s à 25 °C et contenant au moins un groupe alcényle lié au silicium par molécule,
(B) un organohydrogénopolysiloxane contenant au moins deux atomes d'hydrogène liés au silicium par molécule ayant la formule générale (1) : 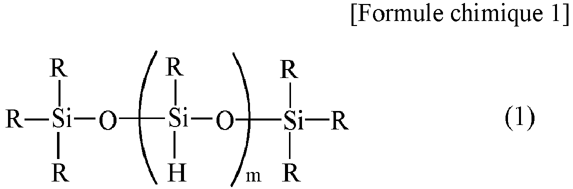 dans laquelle R est un groupe hydrocarboné monovalent en C₁ à C₁₀ exempt d'insaturation aliphatique et m est un entier de 2 à 200, en une quantité telle que le nombre de groupes Si-H divisés par le nombre de groupes alcényle liés au silicium dans la composition se situe dans la plage de 0,1 à 5,0,
(C) une quantité efficace d'un catalyseur de durcissement du complexe de platine photoactif choisi dans le groupe constitué par
le complexe de platine triméthyl(acétylacétonato),
le complexe de platine triméthyl(2,4-pentanedionate),
le complexe de platine triméthyl(3,5-heptanedionate),
le complexe de platine triméthyl(méthylacétoacétate),
le complexe de platine bis(2,4-pentanedionato),
le complexe de platine bis(2,4-hexanedionato),
le complexe de platine bis(2,4-heptanedionato),
le complexe de platine bis(3,5-heptanedionato),
le complexe de platine bis(1-phényl-1,3-butanedionato),
le complexe de platine bis(1,3-diphényl-1,3-propanedionato),
le complexe de platine diméthyl(1,5-cyclooctadiényl),
le complexe de platine diphényl(1,5-cyclooctadiényl),
le complexe de platine dipropyl(1,5-cyclooctadiényl),
le complexe de platine diméthyl(2,5-norbornadiène),
le complexe de platine diphényl(2,5-norbornadiène),
le complexe de platine diméthyl(cyclopentadiényl),
le complexe de platine diéthyl(methylcyclopentadiényl),
le complexe de platine diphényl(triméthylsilycyclopentadiényl),
le complexe de platine diéthyl(méthylcycloocta-1,5-diényl),
le complexe de platine triméthyl(cyclopentadiényl),
le complexe de platine éthyldiméthyl(cyclopentadiényl),
le complexe de platine acétyldiméthyl(cyclopentadiényl),
le complexe de platine triméthyl(méthylcyclopentadiényl),
le complexe de platine trihéxyl(méthylcyclopentadiényl),
le complexe de platine triméthyl(triméthylsilylcyclopentadiényl),
le complexe de platine triphényl(diméthylphénylsilylcyclopentadiényl) et le complexe de platine diméthyltriméthylsilylméthyl (cyclopentadiényl), et
(D) 100 à 20 000 parties en poids d'une charge thermoconductrice ayant une conductivité thermique d'au moins 10 W/m °C, et
(E) un organopolysiloxane ayant la formule générale (2) : 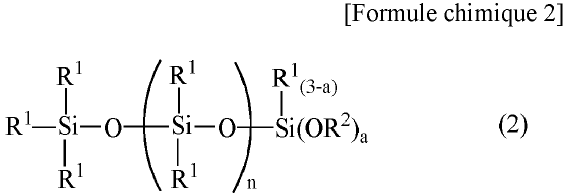 dans laquelle R¹ est indépendamment un groupe hydrocarboné monovalent substitué ou non substitué, R² est indépendamment un groupe alkyle, alcoxyalkyle, alcényle ou acyle, n est un entier de 2 à 100 et a est un entier de 1 à 3, dans une quantité de 5 à 900 parties en poids pour 100 parties en poids du composant (A),
la composition ayant une viscosité de 30 à 800 Pa.s à 25 °C telle que mesurée par un viscosimètre Malcom à une vitesse de rotation de 10 tr/min.

2. Composition de graisse silicone thermoconductrice épaississante aux UV selon la revendication 1, dans laquelle le composant (B) est exempt d'unités R¹₂SiO R¹ étant indépendamment un groupe hydrocarboné monovalent substitué ou non substitué, et contenant les atomes d'hydrogène liés au silicium uniquement sur des chaînes latérales, mais pas à l'extrémité.

3. Composition de graisse silicone thermoconductrice épaississante aux UV, selon la revendication 1 ou 2, comprenant en outre (F) 0,1 à 100 parties en poids de silice finement divisée pour 100 parties en poids du composant (A).

4. Composition de graisse silicone thermoconductrice épaississante aux UV, selon la revendication 3, dans laquelle la silice finement divisée comme composant (F) est de la silice fumée traitée en surface.

5. Composition de graisse silicone thermoconductrice épaississante aux UV, selon l'une quelconque des revendications 1 à 4, comprenant en outre (H) 0,1 à 20 parties en poids d'un promoteur d'adhérence pour 100 parties en poids du composant (A).

6. Composition de graisse silicone thermoconductrice épaississante aux UV, selon l'une quelconque des revendications 1 à 5, qui a une rétention de forme telle que démontrée par un changement de diamètre à 1 mm près lorsque la composition est appliquée sur une plaque d'aluminium de manière à former un disque ayant un diamètre de 1 cm (0,5 ml) dans un environnement à 25 °C et maintenue à l'horizontale à 25 °C pendant 24 heures, et a une dureté de 1 à 90 telle que mesurée par un duromètre en caoutchouc de type Asker C, après épaississement aux UV.

7. Composition de graisse silicone thermoconductrice épaississante aux UV, selon l'une quelconque des revendications 1 à 6, dans laquelle le nombre de groupes Si-H divisés par le nombre de groupes alcényle liés au silicium dans la composition se situe dans la plage de 0,1 à 0,4.
